# EUROPEAN PATENT SPECIFICATION

(11) **EP 1 712 764 B1**
(45) Date of publication and mention of the grant of the patent: **03.11.2010**
(21) Application number: 06112457.4
(22) Date of filing: 11.04.2006
(51) Int. Cl.: F02D 41/02, F01N 3/20

(54) **Method and control system for an engine equipped with an SCR system**
Verfahren und Steuervorrichtung für eine mit einem SCR-Katalysator ausgestattete Brennkraftmaschine
Méthode et dispositif de commande pour un moteur équipé d'un système SCR

(30) Priority: 11.04.2005 IT MI20050601
(43) Date of publication of application: 18.10.2006
(73) Proprietor: IVECO S.p.A., 10156 Torino (IT)
(72) Inventor: Hagin, Harald, 8280, Kreuzlingen (CH); Dellora, Giancarlo, 10129, Torino (IT)
(74) Representative: Borsano, Corrado

(56) References cited:
- EP-A- 1 367 248
- DE-A1- 10 316 112
- US-A- 5 651 247
- US-A- 5 924 280
- US-A1- 2004 194 451
- US-B1- 6 209 313
- US-B1- 6 415 602
- US-B1- 6 422 003

## Description

### FIELD OF THE INVENTION

The present invention relates to a method and a control system for an internal combustion engine, in particular a diesel engine, equipped with an SCR system for reducing the nitrogen oxide content in the exhaust gases.

### PRIOR ART

A problem that is strongly felt in the field of internal combustion engines, in particular in the field of diesel engines, is the formation of nitrogen oxides during combustion, nitrogen oxides that are discharged with the exhaust gases from the engine and represent one of the main pollutants. Although several solutions have been suggested for reducing the formation of these compounds, nitrogen oxide levels in exhaust emissions continue to be a problem and, also in view of the need to comply with stricter emissions standards, there is a need for systems that are capable of reducing nitrogen oxides in exhaust gases. One such system is the SCR (Selective Catalytic Reduction) system; this system is based on the reaction, promoted by an appropriate catalytic system, between the nitrogen oxides in the exhaust gases and ammonia that is injected as a reducing agent.

The ammonia is usually injected directly into the nitrogen oxide reduction system in the form of a reagent, preferably a liquid reagent, capable of releasing ammonia, when exposed to the right temperature conditions or to the action of suitable catalysts. The preferred source is usually urea in an aqueous solution, for example a solution containing between 10 and 60% in weight (concentrations of around 32.5% are preferable), from which the ammonia is generated by means of hydrolysis.

The reagent supply is regulated, by means of suitable control systems, on the basis of specific requirements: the reduction of nitrogen oxides (the level whereof generally varies according to the engine speed and load conditions), consistently with the efficiency of the catalyst, and thus its ability to remove ammonia, under the conditions in which it is required to operate at a given moment (in particular temperature conditions).

One requirement that must be considered is the need to prevent, or at least limit, the amount of un-reacted ammonia in the catalyst that escapes into the environment, which may be due to an excessive supply, or to the slipping of ammonia that had previously been stored in the catalyst through absorption; such ammonia slip may occur, for example, following a rise in the temperature due to an increased engine load. The amount of ammonia that can be stored by the catalyst mass in an SCR system depends on the type and temperature of the catalyst. The most commonly used catalytic systems, for example V₂O₅ or WO₃/TiO₂ catalysts, may be of the extruded monolithic type or, for example, they may consist of catalyst-coated honeycomb structures: extruded monolithic systems usually have a greater storage capacity.

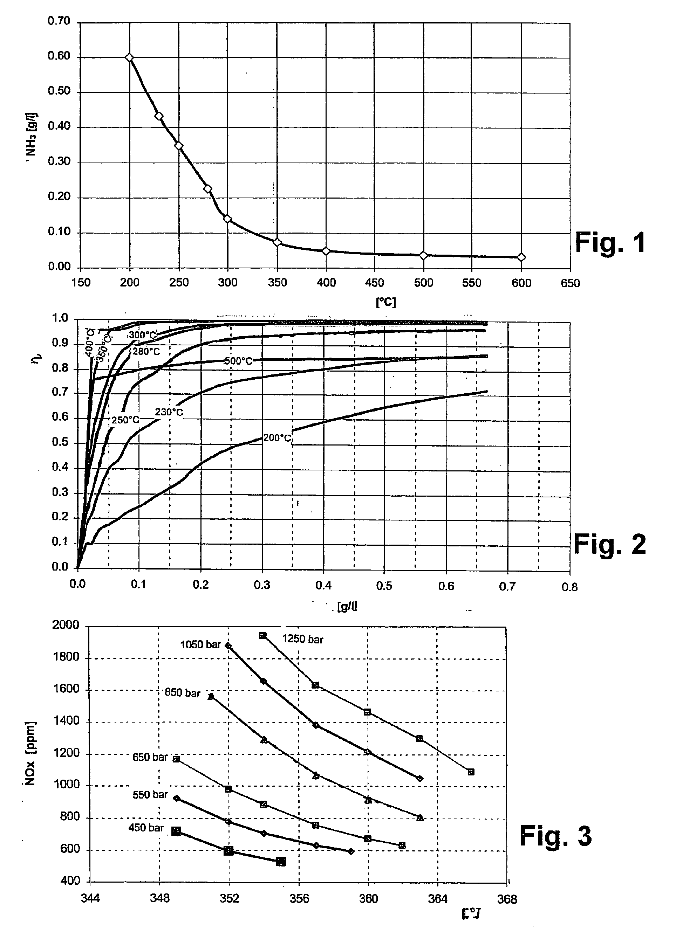

Figure 1 shows an example of an absorption curve for a type of SCR catalytic system, in which the y-axis corresponds to the amount of NH₃ that is stored (NH₃ in grams per liter of volume of the catalyst) and the x-axis corresponds to the temperature. Note that there is a significant variation between 200 and 400°C, which is a normal range of catalyst operation, especially at low loads, and that the capacity is almost nil above 400 °C. The amount of NH₃ that is stored affects the efficiency with which the nitrogen oxides are reduced; the lower the temperature, the greater the influence, as shown, for example, in the diagram in figure 2, where the level of efficiency is shown as a function of the amount of NH₃ that is stored, at different temperatures.

It would, therefore, be desirable to store as much ammonia as possible, when the engine is operating under low load conditions (which implies low exhaust gas temperatures), but this amount is limited by the fact that an increase in the temperature of the exhaust gases would reduce the storage capacity, and said reduction would not be compensated for by the amount of nitrogen oxides coming from the engine, with a subsequent slippage of ammonia, even if the reagent supply is interrupted.

The level of nitrogen oxides generated by a diesel engine depends, under given load conditions, on a series of operating parameters, the most important of which are the injection advance and injection pressure, as illustrated in figure 3, where the angle of injection start is shown in the x-axis and the concentration of NOₓ (ppm) is shown in the y-axis and the curves are parameterized by the injection pressure; it can be noted that a greater advance results in the production of higher levels of said oxides, but, by improving combustion, it reduces particulate emissions and overall efficiency is enhanced. The greater the engine load the greater the variation in the amount of nitrogen oxides that are produced, as a function of said parameters. Another parameter which controls the NOₓ generation by the engine is the EGR (exhaust gas recirculation) rate.

The advance is usually controlled by means of a control system according to the engine load and speed conditions, on the basis of predefined functions (or "maps"). Said maps are also defined as a function of the optimization of the pollutants generated: if the engine is equipped with an SCR-type system a compromise is generally found between the formation of nitrogen oxides, according to the reduction capacity of the catalyst, and the formation of other pollutants. In particular, at a given load and a given moment the operation of the catalyst is considered under those temperature conditions, without taking into account the time evolution of the operating conditions up to the moment considered. The reduction capacity thus considered does not therefore take into account any possible build-up of ammonia that may have occurred previously at temperatures other than those at the moment considered. The maximum amount of nitrogen oxides that can be produced is such that they can be duly reduced regardless of the temperature conditions prior to that given moment, and is thus usually lower than that which the system would have converted had storage been possible. For this reason, the amount of ammonia that is stored, especially under low load conditions (and thus, generally, at low catalyst surface temperatures) is limited in view of the possibility of a sudden increase in the load and temperature, with the risk of ammonia escaping as described above. This limits the capacity for converting nitrogen oxides under low engine load conditions so that, in said conditions, the catalyst is not fully exploited; furthermore, in the event of high and very rapid load increases, an ammonia slip into the environment_may take place anyway.

EP A 1 367 248 describes a NOₓ emission control method, whereby an expected generation of the pollutant is calculated on the basis of parameters such as boost pressure and temperature, air humidity, air-fuel ratio and the expected generation is used to dose the urea fed to the SCR converter. The usable storage capacity of the converter cannot be fully exploited even by this method.

### SUMMARY OF THE INVENTION

The problems described above have now been solved according to the present invention by a control method for an engine, in particular a diesel engine, equipped with an SCR system for reducing the nitrogen oxide content in the exhaust gases of said engine, said system comprising a catalytic converter positioned on the exhaust line of said engine, comprising the following operations:
calculation of a required amount of nitrogen oxides in the exhaust gases entering said converter;
adjustment, on the basis of said requirement, of at least one engine operating parameter capable of affecting the level of nitrogen oxides generated by the engine characterised by comprising the measurement of the concentration of ammonia, at the output of said converter or the evaluation of a value of potential ammonia slip by the catalyst and the calculation of said required amount of nitrogen oxide on the basis of said concentration or of said value of potential ammonia slip respectively.

According to a preferred embodiment of the invention, said parameter is the fuel injection advance, or the injection pressure. According to another preferred embodiment, said parameter is the exhaust gas recirculation (EGR) rate. A combination of more than one parameter may also be used.

The term SCR system is taken as meaning a system comprising a catalyst capable of promoting nitrogen oxide reduction by reaction with ammonia.

The invention also regards a control system for an engine as specified above, suitable for implementing the method according to the present invention.

The invention relates in particular to that set forth in the claims, which are attached hereto.

### LIST OF DRAWINGS

The present invention will now be illustrated through a detailed description of the preferred, but not exclusive embodiments, provided merely by way of example, with the aid of the figures attached hereto, of which:
figures 1, 2 and 3, described earlier, illustrate possible trends regarding, respectively, the capacity of an SCR system to store ammonia, the efficiency with which the nitrogen oxides are reduced as a function of the amount of ammonia that is stored and the temperature, the concentration of nitrogen oxides in the exhaust gases generated by a diesel engine as a function of the fuel injection start point and the injection pressure;
figure 4 shows a possible scheme of the operations according to a method according to the present invention;
figure 5 shows a scheme of the operations for evaluating a potential ammonia slip, said operations being part of a method according to an embodiment of the invention.

DETAILED DESCRIPTION OF A PREFERRED EMBODIMENT The method according to the present invention is used to control a reciprocating internal combustion engine, comprising one or more cylinders, preferably a diesel engine for a vehicle, for example an industrial vehicle, equipped with an SCR catalytic system. The SCR catalytic system comprises a catalytic converter positioned on an engine exhaust gas line and said converter is equipped with a catalyst of a suitable type capable of reducing the nitrogen oxides in the gases coming from the engine and fed into said system for reaction with ammonia that is supplied in a suitable manner. The ammonia is usually produced by the decomposition of a specific reagent, for example through hydrolysis of urea, injected in the form of an aqueous solution upstream of the catalytic converter. The solution may be injected by means of a specific injection device, and is preferably atomised, into the exhaust gas line. The supply of said solution is regulated as required, for example by alternating a period of injection with periods when injection is suspended, so that the amount available in the converter is maintained at a suitable level, depending on the operating parameters.

As described above, the invention regards a method for controlling the engine comprising the calculation of an amount of nitrogen oxides required by said catalytic system. The method may be performed by a specific control system, preferably an electronic control system.

The required amount is an amount of nitrogen oxides to be fed into the catalytic system. Said amount must be enough to prevent the converter from releasing excessive amounts of ammonia into the atmosphere, but not so high to result in the presence of excessive amounts of nitrogen oxides on the converter output. Said requirement is obviously a function, at a given instant, of the catalyst temperature, which is closely linked to the temperature of the exhaust gases, and the amount of ammonia that has been stored in the converter in the form of ammonia absorbed by the catalyst.

Said requirement is used as the basis for adjusting an engine operating parameter capable of affecting the amount of nitrogen oxides generated by the engine; this means that a correct value is defined for said parameter and the parameter is brought to said value. Said parameter may be adjusted by the engine control system, which comprises means for performing said calculation and means of implementation.

According to a preferred embodiment of the invention, the engine is a diesel engine and said parameter is the fuel injection advance; according to another embodiment of the invention said parameter is the fuel injection pressure by an injection device; said injection pressure is the pressure delivered upstream of a suitable valve or opening adapted to inject fuel into the cylinder or into a precombustion chamber, and, in certain types of diesel engine, may be easily varied during engine operation, for example in the so-called "common rail" engines, on the basis of different technologies known in the prior art. According to another embodiment, if EGR is foreseen, the parameter is the EGR rate; as usual the EGR may be performed by means of a recirculation line connecting the exhaust line to the intake line (external EGR), or may be obtained by suitably varying the exhaust or the intake valve timing (internal EGR). regulation of the flow rate in the first case can be obtained by suitable means, such as valves on the recirculation line or recirculation pumps, if any. It must be taken in mind, in this case, that the amount of nitrogen oxides in the exhaust gas stream after withdrawal of recirculated gases must be controlled, in order to suit the SCR catalyst requirements.

The parameter may be adjusted on the basis of a first predefined map used by the control system. Said map preferably associates the production of nitrogen oxides with the engine operating conditions (load, i.e. torque delivered, and engine speed), which are duly measured, by means of the appropriate instruments, or may at least in part be derived from a request by the driver: to this regard it should be pointed out that control systems, including electronic control systems, usually control injection on the basis of the request for torque sent by the driver by means of the accelerator pedal, for example.

The requirement may be calculated in different ways.

According to a first embodiment of the invention, the method comprises measuring the concentration of ammonia, and thus the amount of ammonia slipping at the converter output, by means of a suitable sensor, and calculating the requirement on the basis of said value; this is a feedback control.

According to another embodiment, the requirement is calculated on the basis of a value that refers to the potential ammonia slip by the catalyst; the advantage of this method is that it can prevent ammonia slip, even before this can be detected at the tailpipe, and does not require the use of a sensor, which can be expensive. The potential slip value may be the slip value to be expected in case no adjustment of the engine operating parameter is carried out.

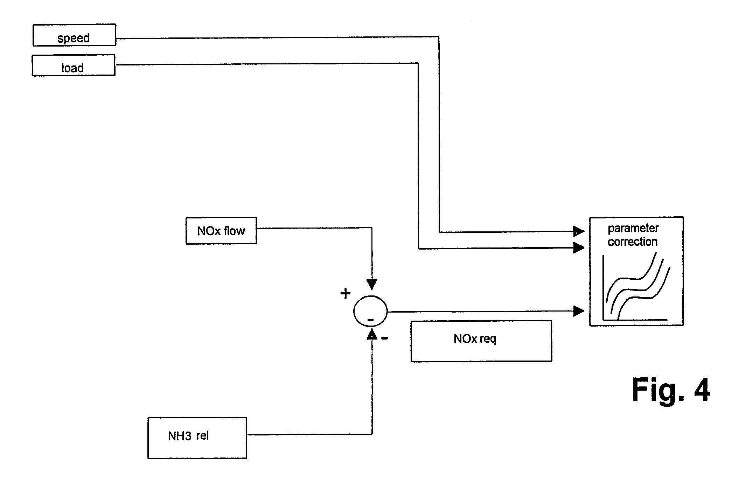

Figure 4 shows a flow chart of a method according to the present invention: the requirement (NOₓ req) may be calculated on the basis of the measured or potential ammonia slip value (NH₃ rel) and compared to the flow of nitrogen oxides coming from the engine (NOₓ flow): said flow may be measured by the control system using a specific sensor, or on the basis of the operating parameters (adjustable parameters, such as injection advance and pressure, EGR rate, if EGR is foreseen, and those defined by the engine operating conditions, i.e. engine load and speed), using the same map that is used to adjust the parameters, to calculate an additional flow (negative or positive) to be added to the measured flow. The adjustment may be performed on the basis of this additional flow on a feedback basis, i.e. by varying the controlled parameter in the direction of the increase or decrease in nitrogen oxides, until balanced. Otherwise, a total nitrogen oxide flow value may be calculated, to adjust (parameter correction) the amount of nitrogen oxides produced according to the first map described above, as a function of the engine speed (speed) and load (load).

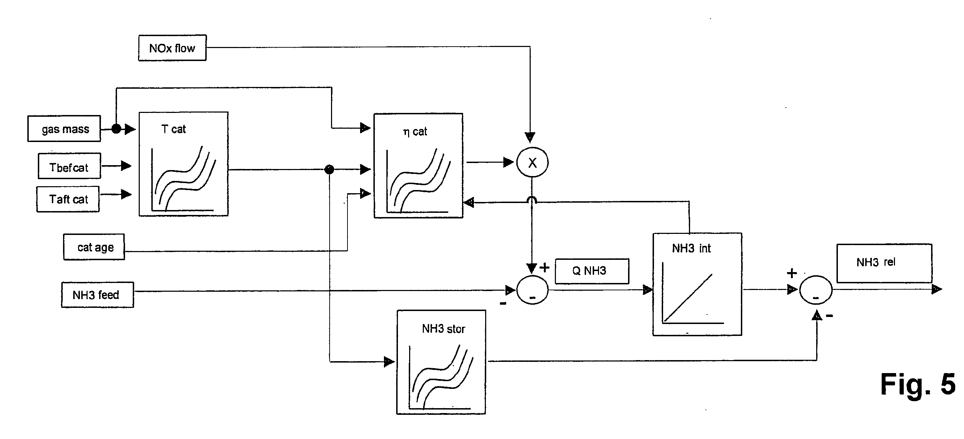

The potential ammonia slip is evaluated on the basis of the catalyst temperature, for example as follows, with reference to figure 5 showing a flow chart of a method for evaluating a potential ammonia slip value, in which the steps of said method may be part of a control method according to an embodiment of the present invention. Moment by moment (at discrete intervals or continuously depending on the type of equipment that is used), the control system acquires values related to the nitrogen oxide flow into the converter (NOₓ flow), available on the basis of what above explained. depending on said flow and on the catalyst efficiency, the system evaluates ammonia consumption (NH₃ cons.). The efficiency of the catalyst (η cat.) is evaluated on the basis of the exhaust gas flow (gas mass) at its temperature (T cat.), on the basis of a predefined function or third map, which function also takes into account the ammonia stored by the catalyst, a parameter that, as described earlier, may strongly affect the level of efficiency and that, as below explained, is acquired by the control system. The second map may also consider the ageing of the catalyst (cat. age.), if possible. The control system may acquire said temperature (T cat.) by means of specific sensors positioned in the catalyst or upstream and downstream of the converter (T. bef cat., T aft cat.); said sensors are linked, together with the exhaust gas flow, by a predefined function (or third map) in the control system, to a catalyst temperature value that can be used for subsequent calculations.

On the basis of the ammonia consumption, and the supply of ammonia upstream of the converter (NH₃ feed.), for example in the form of urea, the system can calculate a time amount of ammonia (Q NH₃) being stored in the converter (said amount may, of course, be positive or negative). By integrating said value in time, the system is able to calculate the amount of ammonia stored in the converter at any moment (NH₃ int.)

The supply of ammonia or reagent is usually controlled by a specific system, and may advantageously be controlled by the same system that controls the engine, using specific devices, such as injectors, valves and/or pumps. This data is, therefore, available.

Finally, the ammonia storage value is used in combination with a catalyst storage capacity value (NH₃ stor), which depends on the temperature, already available to the system, to obtain the potential ammonia slip value (NH₃ rel.). If the storage capacity is lower than the amount that is stored, at a given moment, for example following a rise in the temperature of the catalyst, said value is positive, whereas the value is negative if there is still the possibility of storing ammonia. As described above, said value can be used as the basis for calculating the amount of nitrogen oxides required to control the engine.

Furthermore, according to a preferred embodiment of the invention, the storage value and potential slip value are also used to control the supply of the reagent, which may for example be suspended in order to prevent ammonia from escaping, and may in any case be regulated so as to enable a higher storage of ammonia than generally regarded as possible according to the prior art. This constitutes a preferred embodiment of the present invention. According to another embodiment, the supply can be regulated so as to maintain a rate of saturation of the catalyst of more than 60%, preferably more than 65%; according to another embodiment, the supply may be controlled so as to reach for at least a portion of the operating time a saturation rate of 80%, and optionally of 90%. In fact, the possibility of increasing the flow of nitrogen oxides as a function of the potential ammonia slip (or measured slip), allows a larger ammonia storage, without the risk of unacceptable ammonia slip, even in case of an increase of the catalyst temperature. This allows to increase the catalyst efficiency, in particular at low temperatures, as shown in figure 2.

Another advantage of the present invention is that, with a larger ammonia storage, the engine can operate so as to generate higher levels of nitrogen oxides, without increasing nitrogen oxide emissions into the atmosphere, by increasing the injection advance or pressure, or decreasing the EGR rate, if EGR is foreseen. This corresponds to an improved fuel combustion and engine efficiency and reduces the formation of other pollutants, such as particulate. This can happen in particular in connection with load increases when ammonia has been stored previously. Once the stored ammonia has been removed, or when storage had not been previously possible, the system can reduce the nitrogen oxides generation to an amount that can be satisfactorily treated by the system, anyway.

The alternative methods, measuring or evaluating ammonia slip and evaluating or measuring the nitrogen oxides generated by the engine, can also be used in combination for greater precision or safety of operation, and to correct any errors that may have a cumulative effect, in particular in connection to operations whereby the values must be integrated over time; the person skilled in the art may also conceive additional control operations, in order to enhance the precision and self-correcting capabilities of the system.

As above said, the invention also relates to a control system comprising means for acquiring the values as described above, means for calculating the values, as described above, means for adjusting said engine operating parameter capable of affecting the amount of nitrogen oxides generated by the engine, and preferably, means for regulating the amount of reagent injected into the SCR system.

The various means listed above may comprise both devices and programs suitable for use by a computer, such as may be considered, at least in part, the control system according to the present invention.

The invention also relates to a computer program capable of implementing the method according to the present invention, if run on an electronic control system according to the present invention. The invention also relates to an engine, preferably a diesel engine, equipped with the control system as described above and a vehicle incorporating said engine.

## Claims

1. Control method for an engine equipped with an SCR system for reducing the nitrogen oxide content in the exhaust gases of said engine, said system comprising a converter containing a catalyst, positioned on the exhaust line of said engine, method comprising the following operations:
calculation (NOx req) of a required amount of nitrogen oxides in the exhaust gases entering said converter;
adjustment, on the basis of said requirement, of at least one engine operating parameter affecting the amount of nitrogen oxides generated by the engine;
**characterised by** comprising the measurement (NH₃ rel) of the concentration of ammonia, at the output of said converter or the evaluation (NH₃ rel) of a value of potential ammonia slip by the catalyst and the calculation of said required amount of nitrogen oxide on the basis of said concentration or of said value of potential ammonia slip respectively.

2. Method according to claim 1, wherein the engine is a diesel engine and said parameter is the fuel injection advance.

3. Method according to claim 1, wherein the engine is a diesel engine and said parameter is the fuel injection pressure by an injection device.

4. Method according to claim 1, wherein the engine is a diesel engine and said parameter is the EGR rate.

5. Method according to any of the previous claims, wherein the parameter is adjusted on the basis of a first predefined map, associating the generation of nitrogen oxides by the engine, with the torque delivered by the engine and the engine speed.

6. Method according to any of the previous claims, comprising the calculation (NH₃ int) of the amount of ammonia stored in the converter, wherein said potential slip value is evaluated on the basis of said amount of ammonia.

7. Method according to any of claims 1 to 5, comprising the calculation (NH₃ stor) of the maximum ammonia storage capacity of the converter, on the basis of a catalyst temperature value.

8. Method according to any of the previous claims, comprising the regulation of the supply of a reagent, capable of generating ammonia upstream of the converter.

9. Method according to claim 8, wherein the saturation rate of the catalyst with ammonia is maintained above 60%.

10. Method according to claim 8 or 9, wherein the rate of saturation of the catalyst with ammonia may reach, at least for a portion of the time when the engine is running, a value of 80 and optionally 90%.

11. Control system for an engine equipped with an SCR system for reducing the nitrogen oxide content in the exhaust gases of said engine, said SCR system comprising a converter containing a catalyst, positioned on the exhaust line of said engine, the system comprising:
means for calculating a nitrogen oxide requirement in the exhaust gases entering said converter;
means for adjusting, on the basis of said requirement, at least one engine operating parameter affecting the amount of nitrogen oxides generated by the engine;
**characterised by** comprising means for measuring the concentration of ammonia at the output of said converter or means for evaluating a value of potential ammonia slip by the catalyst and the calculating means calculates said nitrogen oxide requirement on the basis of said concentration or of said value of potential ammonia slip respectively.

12. System according to claim 11, comprising means for regulating the supply of a reagent capable of generating ammonia upstream of said converter.

13. System according to claim 11 or 12 suitable for implementing a method according to any of the claims from 1 to 10.

14. Diesel engine equipped with a system according to any of the claims from 11 to 13.

15. Computer program implementing the method according to any of the claims from 1 to 10, if run on an electronic control system according to any of the claims from 11 to 13.

16. Vehicle equipped with an engine according to claim 14.

## Patentansprüche

1. Steuerungsverfahren für einen Motor, der mit einem SCR-(selective catalytic reduction-)System zum Reduzieren des Stickoxid-Gehalts in den Abgasen des Motors ausgerüstet ist, wobei das System einen einen Katalysator enthaltenden Konverter umfasst, der in der Abgasleitung des Motors angeordnet ist, wobei das Verfahren die folgenden Schritte umfasst:
- Berechnen einer Bedarfsmenge an Stickoxiden (NOx req) in den Abgasen, die in den Konverter eintreten;
- Anpassen wenigstens eines Motor-Betriebsparameters, der die Menge an Stickoxiden beeinflusst, die durch den Motor gebildet werden, auf der Basis des genannten Bedarfs;
**gekennzeichnet dadurch, dass** das Verfahren umfasst die Messung der Konzentration an Ammoniak (NH₃ rel) am Ausgang des Konverters oder die Bewertung eines Werts eines möglichen Ammoniak-Verlusts durch den Katalysator (NH₃ rel) und die Berechnung der Bedarfsmenge an Stickoxid auf der Basis der Konzentration bzw. des Werts eines potentiellen Ammoniak-Verlusts.

2. Verfahren nach Anspruch 1, worin der Motor ein Dieselmotor ist und der Parameter die Anhebung der Brennstoff-Einspritzung ist.

3. Verfahren nach Anspruch 1, worin der Motor ein Dieselmotor ist und der Parameter der Druck der Brennstoff-Einspritzung durch eine Einspritz-Vorrichtung ist.

4. Verfahren nach Anspruch 1, worin der Motor ein Dieselmotor ist und der Parameter die EGR(exhaust gas re-circulation-)Rate ist.

5. Verfahren nach irgendeinem der vorangehenden Ansprüche, worin der Parameter angepasst wird auf der Basis eines ersten vordefinierten Plans, der die Erzeugung von Stickoxiden durch den Motor mit dem Drehmoment, das durch den Motor geliefert wird, und der Motor-Geschwindigkeit assoziiert.

6. Verfahren nach irgendeinem der vorangehenden Ansprüche, umfassend das Berechnen der Menge an Ammoniak (NH₃ int), die in den Konverter gespeichert ist, worin der potentielle Verlustwert bewertet wird auf der Basis der Menge an Ammoniak.

7. Verfahren nach irgendeinem der Ansprüche 1 bis 5, umfassend das Berechnen der maximalen Ammoniak-Speicherkapazität (NH₃ stor) des Konverters auf der Basis eines Katalysator-Temperaturwerts.

8. Verfahren nach irgendeinem der vorangehenden Ansprüche, umfassend das Regeln der Zufuhr eines Reagenz, das in der Lage ist, stromaufwärts des Konverters Ammoniak zu erzeugen.

9. Verfahren nach Anspruch 8, worin die Sättigungsrate des Katalysators mit Ammoniak über 60 % gehalten wird.

10. Verfahren nach Anspruch 8 oder 9, worin die Sättigungsrate des Katalysators mit Ammoniak wenigstens für einen Teil der Zeit, während der der Motor läuft, einen Wert von 80 und gegebenenfalls 90 % erreichen kann.

11. Steuerungssystem für einen Motor, der mit einem SCR-System zum Reduzieren des Stickoxid-Gehalts in den Abgasen des Motors ausgerüstet ist, wobei das SCR-System umfasst einen einen Katalysator enthaltenden Konverter, der in der Abgasleitung des Motors angeordnet ist, wobei das System umfasst:
- Einrichtungen zum Berechnen eines Stickoxid-Bedarfs in den Abgasen, die in den Konverter eintreten;
- Einrichtungen zum Anpassen wenigstens eines Motor-Betriebsparameters, der die Menge an Stickoxiden beeinflusst, die durch den Motor gebildet werden, auf der Basis des Bedarfs;
**gekennzeichnet dadurch, dass** es umfasst Einrichtungen zum Messen der Konzentration von Ammoniak am Ausgang des Konverters oder Einrichtungen zum Bewerten eines Werts eines potentiellen Ammoniak-Verlusts durch den Katalysator, und dass die Berechnungseinrichtung den Stickoxid-Bedarf auf der Basis der Konzentration bzw. des Werts des möglichen Ammoniak-Verlusts berechnet.

12. System nach Anspruch 11, umfassend Einrichtungen zum Regulieren der Zufuhr eines Reagenz, das in der Lage ist, Ammoniak stromaufwärts des Konverters zu erzeugen.

13. System nach Anspruch 11 oder 12, geeignet zum Implementieren eines Verfahrens nach irgendeinem der Ansprüche 1 bis 10.

14. Dieselmotor, ausgerüstet mit einem System nach irgendeinem der Ansprüche 11 bis 13.

15. Computerprogramm, welches das Verfahren nach irgendeinem der Ansprüche 1 bis 10 implementiert, wenn man es auf einem elektronischen Steuerungssystem nach irgendeinem der Ansprüche 11 bis 13 laufen lässt.

16. Fahrzeug ausgerüstet mit einem Motor nach Anspruch 14.

## Revendications

1. Procédé de contrôle pour un moteur équipé d'un système RCS pour réduire la teneur en oxydes d'azote dans les gaz d'échappement dudit moteur, ledit système comprenant un convertisseur contenant un catalyseur, positionné sur la ligne d'échappement dudit moteur, le procédé comprenant les opérations suivantes :
le calcul (NOx néc) d'une quantité nécessaire d'oxydes d'azote dans les gaz d'échappement qui entrent dans le convertisseur ;
l'ajustement, en fonction dudit besoin, d'au moins un paramètre de fonctionnement du moteur ayant un effet sur la quantité d'oxydes d'azote générée par le moteur ;
**caractérisé par le fait qu'**il comprend la mesure (NH₃ rel) de la concentration en ammoniac, à la sortie dudit convertisseur ou l'évaluation (NH₃ rel) d'une valeur de dégagement d'ammoniac potentiel par le catalyseur et le calcul de ladite quantité nécessaire d'oxydes d'azote en fonction de ladite concentration ou de ladite valeur du dégagement d'ammoniac potentiel respectivement.

2. Procédé selon la revendication 1, dans lequel le moteur est un moteur diesel et ledit paramètre est l'avance à l'injection de carburant.

3. Procédé selon la revendication 1, dans lequel le moteur est un moteur diesel et ledit paramètre est la pression de l'injection de carburant par un dispositif d'injection.

4. Procédé selon la revendication 1, dans lequel le moteur est un moteur diesel et ledit paramètre est la vitesse RGE.

5. Procédé selon l'une quelconque des revendications précédentes, dans lequel le paramètre est ajusté en fonction d'une première route prédéfinie, associant la production d'oxydes d'azote par le moteur au couple délivré par le moteur et à la vitesse du moteur.

6. Procédé selon l'une quelconque des revendications précédentes, comprenant le calcul (NH₃ int) de la quantité d'ammoniac stockée dans le convertisseur, dans lequel ladite valeur de dégagement potentiel est évaluée en fonction de ladite quantité d'ammoniac.

7. Procédé selon l'une quelconque des revendications 1 à 5, comprenant le calcul (NH₃ stock) de la capacité maximale de stockage d'ammoniac du convertisseur, en fonction d'une valeur de température du catalyseur.

8. Procédé selon l'une quelconque des revendications précédentes, comprenant la régulation de l'alimentation d'un réactif, pouvant générer de l'ammoniac en amont du convertisseur.

9. Procédé selon la revendication 8, dans lequel le taux de saturation du catalyseur avec l'ammoniac est maintenu au-dessus de 60 %.

10. Procédé selon la revendication 8 ou 9, dans lequel le taux de saturation du catalyseur avec l'ammoniac peut atteindre au moins pendant une portion de temps lorsque le moteur est en marche, une valeur de 80 % et facultativement de 90 %.

11. Système de contrôle d'un moteur équipé d'un système RCS pour réduire la teneur en oxydes d'azote dans les gaz d'échappement dudit moteur, ledit système RCS comprenant un convertisseur contenant un catalyseur, positionné sur la ligne d'échappement dudit moteur, le système comprenant les opérations suivantes :
un moyen de calcul d'un besoin en oxydes d'azote dans les gaz d'échappement qui entrent dans le convertisseur ;
un moyen d'ajustement, en fonction dudit besoin, d'au moins un paramètre de fonctionnement du moteur affectant la quantité d'oxydes d'azote générée par le moteur ;
**caractérisé par le fait qu'**il comprend un moyen de mesure de la concentration en ammoniac à la sortie dudit convertisseur ou un moyen d'évaluation d'une valeur de dégagement d'ammoniac potentiel par le catalyseur, et le moyen de calcul calcule ledit besoin en oxydes d'azote en fonction de ladite concentration ou de ladite valeur du dégagement d'ammoniac potentiel respectivement.

12. Système selon la revendication 11, comprenant un moyen de régulation de l'alimentation d'un réactif pouvant générer de l'ammoniac en amont dudit convertisseur.

13. Système selon la revendication 11 ou 12, approprié pour la mise en oeuvre d'un procédé selon l'une quelconque des revendications 1 à 10.

14. Moteur diesel équipé d'un système selon l'une quelconque des revendications 11 à 13.

15. Programme informatique de mise en oeuvre du procédé selon l'une quelconque des revendications 1 à 10, s'il est utilisé sur un système de contrôle électronique selon l'une quelconque des revendications 11 à 13.

16. Véhicule équipé d'un moteur selon la revendication 14.
